(19) **Europäisches Patentamt / European Patent Office / Office européen des brevets**

(11) **EP 1 536 575 B1**

(12) **FASCICULE DE BREVET EUROPEEN**

(45) Date de publication et mention
de la délivrance du brevet:
**18.05.2011 Bulletin 2011/20**

(51) Int Cl.:
***H04B 7/185*** *(2006.01)*

(21) Numéro de dépôt: **04292759.0**

(22) Date de dépôt: **23.11.2004**

(54) **Procédé de gestion de communications dans un réseau de communications à acces aléatoire et à longs délais de transmission d'acquittements de demande d'accès**

Kommunikationssteuerungsverfahren für wahlfreie Netzwerke mit langer Übertragungsverzögerungszeit

Communications control method in random access networks characterized by long transmission delays

(84) Etats contractants désignés:
**AT BE BG CH CY CZ DE DK EE ES FI FR GB GR HU IE IS IT LI LU MC NL PL PT RO SE SI SK TR**

(30) Priorité: **25.11.2003 FR 0313773**

(43) Date de publication de la demande:
**01.06.2005 Bulletin 2005/22**

(73) Titulaire: **Alcatel Lucent**
**75008 Paris (FR)**

(72) Inventeur: **Martin, Béatrice**
**75005 Paris (FR)**

(74) Mandataire: **Hedarchet, Stéphane**
**Alcatel Lucent**
**Intellectual Property & Standards**
**54 rue La Boétie**
**75008 Paris (FR)**

(56) Documents cités:
**US-B1- 6 522 635**

- **KUEH V Y H ET AL: "W-CDMA random access channel transmission enhancement for satellite-UMTS" 13TH IEEE INTERNATIONAL SYMPOSIUM ON PERSONAL INDOOR AND MOBILE RADIO COMMUNICATIONS. PIMRC 2002. PROCEEDINGS (CAT. NO.02TH8637), PROCEEDINGS OF 13TH IEEE INTERNATIONAL SYMPOSIUM ON PERSONAL INDOOR AND MOBILE RADIO COMMUNICATIONS (PIMRC 20020, PAVILH, 15 septembre 2002 (2002-09-15), pages 1377-1381 vol.3, XP010611489 2002, Piscataway, NJ, USA, IEEE, USA ISBN: 0-7803-7589-0**
- **SCHULIST M: "ACKNOWLEDGMENT OF 3GPP WCDMA RANDOM AND PACKET ACCESS APPLYING SPACE-TIME TRANSMIT-DIVERSITY" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY: IEEE, US, vol. 4 OF 4. CONF. 53, 6 mai 2001 (2001-05-06), pages 2519-2523, XP001076213 ISBN: 0-7803-6728-6**

## Description

L'invention concerne le domaine des réseaux de communications à accès aléatoire et à longs délais de transmission de messages d'acquittement de demande d'accès, et plus particulièrement la gestion des communications au sein de tels réseaux.

Dans certains réseaux du type précité, comme par exemple les réseaux comportant un accès ALOHA dit « à tranches d'accès » (ou « slotted »), les terminaux de communications ne peuvent transmettre leurs messages que pendant des intervalles de temps autorisés par le réseau.

Plus précisément, lors de son premier accès au réseau un terminal demandeur doit transmettre, par exemple à une station de base du réseau, des signaux représentatifs d'un préambule définissant une demande d'accès en vue de transmettre un message associé.

Pour ce faire, dans le cas, par exemple, d'un réseau de type UMTS, le terminal transmet le préambule avec une signature, choisie de façon aléatoire parmi N signatures (par exemple N=16), dans un canal à accès aléatoire spécifique, appelé RACH (pour « Random Access Channel ») et dans une tranche temporelle d'accès (ou « access slot ») de largeur prédéfinie. Par exemple, dans un réseau à accès de type slotted ALOHA le préambule s'étend sur une durée égale à 4096 chips et la largeur d'une tranche d'accès est égale à 5120 chips (ce qui correspond à 1,3 ms).

La cartographie des tranches d'accès pendant lesquelles les terminaux sont autorisés à émettre leurs préambules est configurable et diffusée périodiquement aux terminaux situés dans la zone de couverture du réseau. Par ailleurs, la référence de temps de la station de base est diffusée périodiquement par le réseau sur un canal de synchronisation dédié aux terminaux situés dans sa zone de couverture.

Le message, qui est associé à un préambule transmis, ne peut être émis par le terminal demandeur qu'à condition que ledit préambule ait été effectivement acquitté par le réseau, et plus précisément par l'un de ses équipements de gestion de demandes d'accès, comme par exemple une station de base (ou Node B). Si le terminal demandeur n'a pas reçu de message d'acquittement dans un délai d'acquittement prédéfini et configurable, il ré-émet un autre préambule dans une tranche d'accès, éventuellement différente de la précédente. Le nombre de préambules pouvant être émis consécutivement et la périodicité d'émission des préambules sont prédéfinis et configurables. Ils sont diffusés périodiquement par le réseau aux terminaux situés dans sa zone de couverture.

Un préambule est dit acquitté lorsque l'équipement de gestion de demandes d'accès (par exemple une station de base) a déterminé la présence du terminal qui l'a émis et lorsque le terminal a reçu de l'équipement un message d'acquittement dans le délai d'acquittement précité.

Or, certains réseaux à accès aléatoire comportent des dispositifs ou des équipements qui introduisent de longs, voire très longs, délais de transmission de messages d'acquittement, comparés aux délais d'acquittement des terminaux actuels équipés d'ASICs à temps de réponse rapide. Ce peut être notamment le cas d'un répéteur radio, tel qu'un satellite de communications, ou bien plus simplement d'une carte de traitement implantée, par exemple, dans une station de base (ou Node B). Par exemple, dans un réseau comprenant un répéteur, agencé sous la forme d'un satellite géostationnaire « transparent », le message d'acquittement d'une demande d'accès ne peut pas être reçu par le terminal ayant émis ladite demande d'accès avant environ 500 ms, alors que les délais d'acquittement sont typiquement de l'ordre de quelques millisecondes (2 ms et 3,3333 ms dans le cas d'un réseau UMTS 3GPP).

Un dispositif de ce genre est décrit dans le document "W-CDMA RANDOM ACCESS CHANNEL TRANSMISSION ENHANCEMENT FOR SATELLITE-UMTS" par Kueh V.Y.H (PIMRC 2002).

Il en résulte que les messages associés aux demandes d'accès ne peuvent jamais être transmis par les terminaux du type précité.

Pour tenter de remédier à cet inconvénient, plusieurs solutions ont été proposées. Une première solution consiste à utiliser des délais d'acquittement d'une durée voisine de celle du délai de transmission des messages d'acquittement du réseau. Il faut alors modifier les configurations matérielles et logicielles des équipements, et notamment des terminaux.

Une seconde solution consiste à supprimer les messages d'acquittement (destinés à la couche de protocole de niveau 1 (ou couche physique) des terminaux) et/ou à forcer l'émission des messages associés aux demandes d'accès alors que le message d'acquittement n'a pas été reçu. Mais, l'accès n'est plus de type slotted ALOHA. En outre, l'acquittement n'ayant pas été effectué, et les couches de protocole de niveaux 2 et 3 des terminaux n'ayant pas reçu les demandes de niveau 2 et 3, elles ne peuvent pas acquitter. Il faut alors modifier les standards de l'interface de transmission et les configurations matérielles et logicielles des équipements, et notamment des terminaux.

Aucune solution connue n'étant entièrement satisfaisante, l'invention a donc pour but d'améliorer la situation.

Elle propose à cet effet un procédé de gestion de communications pour un réseau de communications à accès aléatoire, comportant au moins un dispositif de traitement qui introduit un important délai de transmission des messages d'acquittement de demande d'accès, comparé aux délais d'acquittement attendus des terminaux du réseau.

Ce procédé consiste à émettre périodiquement, à destination des terminaux du réseau, des messages d'acquittement comportant chacun des informations d'acquittement positif associées à chacune des tranches d'accès autorisées. Ainsi, lorsqu'un terminal demandeur reçoit un message d'acquittement, postérieurement à une demande d'accès transmise pendant une tranche d'accès donnée, il peut transmettre le message qui est associé à sa demande d'accès.

Il est ici rappelé qu'un message d'acquittement classique comporte habituellement une information d'acquittement se présentant généralement sous la forme d'un nombre pouvant prendre au moins deux valeurs différentes : +1 et -1. La valeur -1 désigne un acquittement dit négatif correspondant à une détection de collision d'accès par le réseau. La valeur +1 désigne un acquittement dit positif correspondant à l'acquittement effectif de la demande d'accès par le réseau. Dans le cas d'un réseau UMTS, le nombre précité peut également prendre une troisième valeur égale à 0, correspondant à l'envoi d'une demande d'accès avec une signature indisponible (ou non autorisée).

L'invention consiste donc à transmettre périodiquement, par exemple pour toutes les tranches d'accès autorisées, pendant l'intervalle de temps destiné aux acquittements (par exemple toutes les une ou deux millisecondes), des messages d'acquittement ne comportant que des valeurs +1 pour chaque tranche d'accès, à destination des couches protocolaires de niveau 1 (ou couches physiques) des terminaux.

Les problèmes de collision d'accès peuvent alors être traités par le réseau (du fait qu'il a détecté une collision d'accès) et/ou par les terminaux (du fait que leurs couches protocolaires de niveaux 2 et 3 ne peuvent pas agir sans acquittement du réseau). Par exemple, lorsque le réseau détecte une collision de demandes d'accès, il ne traite pas la réception. Le réseau peut également, lorsqu'il détecte une collision de demandes d'accès, ne pas transmettre aux terminaux concernés par la collision les messages auxiliaires d'acquittement destinés à leurs couches protocolaires de niveaux 2 et 3. Par exemple, lorsqu'un terminal vient de transmettre son message, consécutivement à la réception d'un message d'acquittement, mais qu'il n'a pas reçu du réseau un message auxiliaire d'acquittement, il peut procéder à la réémission de sa demande d'accès.

Selon un autre aspect de l'invention, lorsqu'un terminal souhaite transmettre un message, mais que le réseau à détecté une collision avec la demande d'accès d'un autre terminal, le terminal peut procéder à la réémission de demandes d'accès selon des intervalles de temps de durée variable, par exemple dans un intervalle compris entre environ un dixième de milliseconde et quelques dizaines de millisecondes. Cette durée peut par exemple varier de façon aléatoire ou par dichotomie.

Selon encore un autre aspect de l'invention, lorsque le réseau a effectivement acquitté une première demande d'accès transmise par un terminal, il attribue à ce terminal un canal bidirectionnel dédié, puis il analyse le contenu de chaque message de compte-rendu de mesures, effectuées par le terminal sur ce canal dédié dans le sens réseau vers terminal (voie aller), et/ou la qualité des signaux qu'il reçoit sur le canal dédié (voie retour), afin d'adapter sa puissance d'émission en fonction du contenu de chaque message. Dans ce cas, le réseau peut éventuellement émettre sur le canal dédié des message(s) de reconfiguration des messages de compte-rendu.

Selon encore un autre aspect de l'invention, lorsque le réseau a effectivement acquitté une première demande d'accès transmise par un terminal, et attribué à ce terminal un canal bidirectionnel dédié, il peut analyser la qualité des signaux qu'il reçoit sur ce canal dédié, afin d'adapter, si cela s'avère nécessaire, une partie au moins des paramètres de configuration du canal dédié, comme par exemple la puissance d'émission du terminal concerné, en fonction de la qualité des signaux reçus analysés, puis, en cas d'adaptation, procéder à l'émission sur le canal dédié d'un message de reconfiguration comportant les paramètres adaptés, afin que le terminal procède à la modification de la configuration de son canal dédié dans le sens terminal vers réseau (voie retour). Par ailleurs, lorsque le terminal a procédé à la modification de la configuration de son canal dédié dans le sens terminal vers réseau (voie retour), il peut éventuellement transmettre au réseau un message de confirmation d'exécution de la modification.

L'invention propose également un équipement de gestion de demandes d'accès à un réseau de communications à accès aléatoire, comportant au moins un dispositif de traitement introduisant un important délai de transmission de messages d'acquittement de demande d'accès, agencé pour mettre en oeuvre un procédé du type de celui présenté ci-avant.

L'invention est particulièrement bien adaptée, bien que de façon non exclusive au domaine des communications radio, terrestres 3GPP et/ou satellitaires, et notamment aux réseaux de type W-CDMA, CDMA 2000 par satellite (IS95), TTA, CCSA, S-UMTS et S-GSM/ GPRS, ainsi qu'au domaine des communications optiques par fibres optiques.

D'autres caractéristiques et avantages de l'invention apparaîtront à l'examen de la description détaillée ci-après, et des dessins annexés, sur lesquels :

- la figure 1 illustre de façon schématique un exemple de réalisation d'une partie d'un réseau de communications satellitaire comprenant une gateway SB munie d'une station de base couplée à un dispositif selon l'invention, et
- la figure 2 illustre de façon schématique un exemple de décomposition d'un intervalle temporel (IT) en 15 tranches d'accès (ou access slots (AS)) au sein d'un canal d'acquittement AICH, et la structure physique d'un message (ou indicateur) d'acquittement au sein d'une tranche d'accès.

Les dessins annexés pourront non seulement servir à compléter l'invention, mais aussi contribuer à sa définition, le cas échéant.

L'invention a pour objet de permettre l'adaptation de la gestion des communications d'un réseau à accès aléatoire et à longs délais de transmission de messages d'acquittement de demande d'accès, en présence de terminaux de communication pourvus d'ASICs (ou de tout autre module de traitement, comme par exemple un module électronique reprogrammable de type FPGA) à temps de réponse rapide.

Dans la description qui suit, on entend par « terminal de communication » tout équipement de réseau capable d'échanger des données sous la forme de signaux, soit avec un autre équipement, via leur(s) réseau(x) de rattachement, soit avec son propre réseau de rattachement. Il pourra donc s'agir, par exemple, d'équipements d'utilisateurs, tels que des ordinateurs fixes ou portables, des téléphones portables, ou des assistants personnels numériques (ou PDA), ou bien de serveurs.

On considère par ailleurs dans ce qui suit, à titre d'exemple illustratif, que le réseau de communications est de type satellitaire et dispose d'un mécanisme d'accès de type slotted ALOHA, présenté dans la partie introductive. Mais, l'invention n'est pas limitée à ce seul type de réseau. Elle concerne en effet tous les réseaux de communications, auxquels des terminaux de communication peuvent accéder grâce à une procédure d'accès aléatoire reposant sur l'émission d'un préambule (ou demande d'accès) pendant des tranches temporelles d'accès (ou « access slots »), et comprenant des dispositifs ou des équipements qui introduisent de longs, voire très longs, délais de transmission de messages d'acquittement, comparés aux délais d'acquittement des terminaux équipés d'ASICs à temps de réponse rapide. Ainsi, l'invention concerne les réseaux de communications à accès aléatoire qui comportent des relais ou des répéteurs radio, éventuellement de type satellitaire, comme par exemple les réseaux W-CDMA, CDMA 2000 par satellite (IS95), TTA, CCSA, S-UMTS et S-GSM/GPRS.

Dans ce qui suit, on considère, à titre d'exemple illustratif, que les terminaux sont des équipements d'utilisateurs (UE) de type téléphone portable, rattachés à un réseau de communications satellitaire de type 3G, tel qu'un réseau S-UMTS, et fonctionnant selon le mode dit de duplexage en fréquence (ou FDD pour « Frequency Division Dupleix ») ou le mode dit de duplexage temporel (ou TDD pour « Time Division Dupleix »).

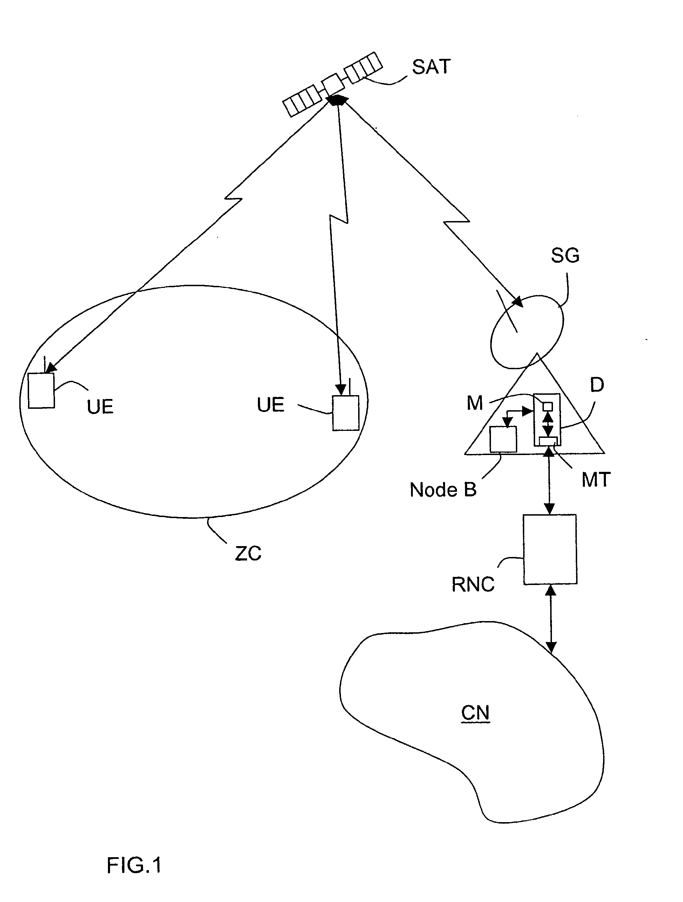

Comme illustré sur la figure 1, un réseau UMTS à accès satellitaire (ou S-UMTS) peut, d'une façon très schématique mais néanmoins suffisante à la compréhension de l'invention, être résumé à un coeur de réseau (ou « Core Network » (CN)) couplé à un réseau d'accès satellitaire.

Le réseau d'accès satellitaire comporte tout d'abord au moins une station de base satellitaire SB (ou « Gateway ») raccordée au Core Network CN par un noeud RNC (ou « Radio Network Controller ») et intégrant un Node B du réseau UMTS. Il comprend en outre au moins un satellite SAT permettant l'échange de données par voie d'ondes entre la station de base satellitaire SB et des équipements d'utilisateurs UE, tels que des téléphones mobiles équipés d'un émetteur/récepteur satellitaire. Le lien satellite constitue une interface satellite. Par ailleurs, le RNC assure à la fois le service et le contrôle. Son appellation anglaise est alors « controlling and serving RNC ».

Le Node B est chargé du traitement du signal au sein de la station de base SB, et notamment de la gestion des demandes d'accès. Il est par ailleurs associé à une ou plusieurs cellules couvrant chacune une zone radio dans laquelle peuvent se trouver un ou plusieurs équipements d'utilisateurs UE. La où les cellules d'un Node B, intégré dans une station de base satellitaire SB, sont comprises dans la zone de couverture ZC du satellite SAT associé à cette station de base satellitaire SB (ici, une cellule correspond à un spot satellite).

Dans ce type de réseau satellitaire, comme indiqué dans la partie introductive, lorsqu'un terminal UE souhaite communiquer un message contenant des données, il doit, lors de son premier accès au réseau, transmettre une demande d'accès (ou préambule) à la station de base satellitaire SB, ci-après appelée gateway. Pour ce faire, le terminal UE génère un préambule accompagné d'une signature qui, dans le cas d'un accès de type slotted ALOHA, s'étend sur une durée de N chips, par exemple N = 4096 chips. Dans le cas d'un réseau S-UMTS, la signature est choisie de façon aléatoire parmi 16 signatures.

Le terminal UE transmet alors le préambule, sous forme de signaux radio, au satellite SAT qui couvre la cellule dans laquelle il est situé, en utilisant un canal à accès aléatoire dédié, appelé RACH (pour « Random Access Channel ») et dans l'une des tranches temporelles d'accès autorisées. Le satellite SAT transmet ensuite le préambule signé à la gateway SB.

Dans un réseau traditionnel, la gateway SB doit, lorsqu'elle reçoit la demande d'accès (ou préambule), mettre en oeuvre un mécanisme d'acquittement consistant notamment à déduire la tranche d'accès, utilisée par le terminal demandeur UE, de l'intervalle temporel pendant lequel le préambule est reçu (lequel est déterminable par rapport à la référence de temps du réseau), puis la signature utilisée et la présence dudit terminal UE. Si toutes ces informations ont bien été déterminées et que la signature utilisée est une signature autorisée, la gateway SB génère une information d'acquittement $AI_s$ dont la valeur est égale à +1. Si toutes ces informations ont bien été déterminées mais que la signature utilisée n'est pas une signature autorisée, la gateway SB génère une information d'acquittement $AI_s$ dont la valeur est égale à 0. Enfin, si l'une au moins des informations précitées ne peut pas être déterminée, on est en présence d'une collision de demande d'accès, et la gateway SB génère une information d'acquittement $AI_s$ dont la valeur est égale à -1. Une collision d'accès survient lorsqu'au moins deux terminaux ont émis un préambule sur une même tranche d'accès avec une même signature.

La gateway SB transforme ensuite l'information

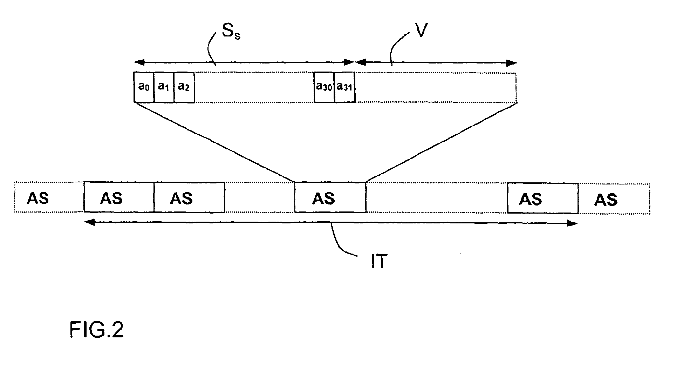

d'acquittement $AI_s$, associée à la signature s d'un préambule reçu dans une tranche d'accès AS i, en une suite $S_s$ de symboles $a_j$, illustrée dans la partie supérieure de la figure 2.

Plus précisément, la suite $S_s$ comprend des symboles $a_j$ définis comme indiqué ci-dessous :

$$a_j = \sum_{s=0}^{15} AI_s b_{s,j}$$

où j = 0 à 31, $AI_s$ = +1, 0 ou -1, et les $b_{s,j}$ désignent des configurations de bits en fonction de chaque signature s.

Cette suite $S_s$ n'occupant que 4096 chips, et une tranche d'accès pouvant contenir 5120 chips (ce qui correspond à 1,3 ms), il reste un espace vide V non utilisé. En d'autres termes, $S_s$ constitue un message d'acquittement associé à une signature s.

La gateway SB insère alors le message d'acquittement ($S_s$) dans le canal AICH dédié à la transmission des messages d'acquittement, pendant l'une des k tranches d'accès AS k, comme illustré dans la partie inférieure de la figure 2. Dans l'exemple illustré, chaque intervalle temporel IT est décomposé en 15 tranches d'accès, si bien que sa durée est égale à 20 ms. Mais, bien entendu, d'autres décompositions sont envisageables.

Chaque terminal demandeur UE écoutant le canal AICH, il peut en extraire le message d'acquittement qui est associé à la signature qu'il avait utilisée pour transmettre son préambule (ou demande d'accès), et déduire de ce message si l'acquittement est effectif ou non.

Comme indiqué dans l'introduction, si l'acquittement est effectif, mais que le terminal UE a reçu le message d'acquittement en dehors du délai d'acquittement pour lequel son ASIC est configuré, il ne peut pas envoyer le message associé au préambule précédemment transmis. Il a en fait entre temps transmis une nouvelle fois son préambule en utilisant une nouvelle signature tirée de façon aléatoire et une nouvelle tranche d'accès, ou bien abandonné la procédure. Dans un réseau concerné par l'invention, un terminal UE ne peut donc jamais transmettre ses messages.

L'invention est destinée à remédier à cet inconvénient.

Elle propose à cet effet un nouveau procédé de gestion des communications dans lequel la gateway SB ne transmet pas sur le canal AICH un message d'acquittement en réponse à une demande d'accès (ou préambule) reçue, mais transmet périodiquement, à destination de l'ensemble des terminaux demandeurs UE du réseau, et plus précisément de leur couche protocolaire de niveau 1 (ou couche physique), des messages d'acquittement comportant chacun des informations d'acquittement positif associées à chacune des tranches d'accès autorisées.

En d'autres termes, la gateway SB génère en permanence (périodiquement) des suites $S_s$ de symboles $a_j$, du type de celle présentée ci-avant (en référence à la figure 2), mais pour lesquelles l'information d'acquittement $AI_s$ est en permanence égale à +1 (acquittement positif). Par conséquent, les suites $S_s$ qui sont générées successivement et périodiquement, et qui correspondent à chacune des différentes signatures autorisées, véhiculent toutes une information laissant entendre aux terminaux demandeurs UE que leur demande d'accès associée à la signature s a été effectivement acquittée par le réseau.

Les terminaux UE reçoivent donc toutes les 1,3 ms (durée d'une tranche d'accès) un message d'acquittement positif associé à l'une des signatures. Par conséquent, un terminal demandeur UE ayant transmis une demande d'accès avec la signature s est certain de recevoir dans le délai d'acquittement pour lequel son ASIC est configuré un message d'acquittement positif associé à cette signature s et autorisant sa couche protocolaire de niveau 1 à transmettre le message associé à ladite demande d'accès.

En même temps que la gateway SB génère en boucle ses messages d'acquittement positif, elle effectue le mécanisme d'acquittement classique, décrit ci-avant, mais sans le terminer par l'envoi d'un message d'acquittement. Cela revient en fait à effectuer simplement une détection de collision de demandes d'accès.

La gateway SB conserve alors le résultat de la détection de collision en correspondance de la signature utilisée. Ainsi, lorsque la gateway SB a détecté une collision de demandes d'accès, et qu'elle reçoit un message associé à l'une de ces demandes d'accès entrées en collision, elle peut être configurée de manière à ne pas traiter le message reçu (pas de décodage). Pour ce faire, la gateway SB accède simplement à la mémoire dans laquelle elle stocke les résultats afin d'en extraire le résultat de la collision qui est stocké en correspondance de la signature associée au message reçu. Puis, elle n'a plus qu'à choisir si elle doit traiter le message ou si elle doit le rejeter en fonction du résultat extrait.

En variante, ou en complément, la gateway SB peut, comme dans un fonctionnement classique, lorsqu'elle a détecté une collision de demandes d'accès, et qu'elle reçoit un message associé à l'une de ces demandes d'accès entrées en collision, être configurée de manière à ne pas transmettre au terminal UE, concerné par la collision, le message auxiliaire d'acquittement destiné à ses couches protocolaires de niveaux 2 et 3.

En effet, le message qui est transmis par un terminal UE comprend des données demandant à la gateway SB de transmettre un message auxiliaire d'acquittement aux couches protocolaires de niveaux 2 et 3 dudit terminal. L'absence de réception d'un message auxiliaire d'acquittement positif, signifie aux couches protocolaires de niveaux 2 et 3 du terminal UE que la demande d'accès précédemment émise n'a pas été effectivement acquittée. Par conséquent, elles ordonnent à la couche physique (couche protocolaire de niveau 1) de réémettre la demande d'accès.

Afin de mettre en oeuvre le procédé de gestion décrit ci-avant, la gateway SB peut être équipée, comme illustré sur la figure 1, d'un dispositif de gestion D couplé au Node B et comprenant un module de traitement MT chargé de générer en boucle les messages d'acquittement positif et d'effectuer les détections de collision de demandes d'accès, ainsi qu'éventuellement une mémoire M chargée de stocker les résultats des détections de collision en correspondance des signatures utilisées.

En variante, le dispositif peut être implanté directement dans le Node B. En fait, le dispositif D peut être implanté dans tout équipement de réseau, de type modem, recevant les signaux radio et chargé de gérer les demandes d'accès, et notamment dans les stations de base (ou « Base Stations » (BTSs)).

Il est important de noter que le dispositif D selon l'invention peut être configuré de manière à permettre la cohabitation de terminaux de type non modifié (c'est-à-dire dont les ASICs (ou modules de traitement) sont à temps de réponse rapide et sont concernés par l'invention) et de type modifié (c'est-à-dire dont les ASICs sont à temps de réponse lent et ne sont pas concernés par l'invention). Dans ce cas, il est préférable de réserver des tranches d'accès et des signatures spécifiques pour chaque type de terminal. Cela permet notamment une introduction progressive de terminaux modifiés dans le réseau, accompagnée d'une répartition adaptable par type des signatures, économisant ainsi la puissance d'émission.

Par ailleurs, l'invention s'applique également à l'accès temporaire à un réseau à accès aléatoire de terminaux étrangers audit réseau, par exemple dans le cas de terminaux UMTS terrestres équipés d'un module d'adaptation RF en bande MSS, en situation de crise (ou d'urgence), ou bien lorsque le terminal ne dispose pas d'un module d'adaptation RF en bande MSS et que le satellite est autorisé à émettre et/ou recevoir temporairement dans la bande de fréquence terrestre.

Le dispositif de gestion D, et notamment son module de traitement MT et sa mémoire M, peuvent être réalisés sous la forme de circuits électroniques, de modules logiciels (ou informatiques), ou d'une combinaison de circuits et de logiciels.

Selon un autre aspect de l'invention, on peut envisager de configurer les terminaux UE afin qu'ils procèdent à la réémission de leurs demandes d'accès selon des intervalles de temps de durée variable, lorsqu'ils n'ont pas reçu de message d'acquittement dans un intervalle de temps prédéfini consécutivement à l'envoi d'une demande d'accès.

La durée des intervalles de temps peut par exemple varier entre environ un dixième de milliseconde et quelques dizaines de millisecondes.

Par ailleurs, cette variation peut être croissante ou bien choisie de façon aléatoire, ou encore dichotomique.

Un autre aspect de l'invention concerne le contrôle de la puissance d'émission de la gateway SB sur la voie dite aller (du réseau vers un terminal) et des terminaux UE sur la voie dite retour (d'un terminal vers le réseau).

Comme le sait l'homme de l'art, dans un réseau à accès aléatoire, une fois que la gateway SB a reçu une demande d'accès d'un terminal UE, qu'elle a effectivement acquittée cette demande d'accès et qu'elle a reçu du terminal UE le message associé à la demande d'accès, elle alloue un canal bidirectionnel dédié à sa liaison avec le terminal UE.

Il est rappelé que dans un réseau de type CDMA l'allocation d'un canal dédié consiste à allouer un code dédié, dans un réseau de type TDMA l'allocation d'un canal dédié consiste à allouer une tranche d'accès dédiée, et dans un réseau de type FDMA l'allocation d'un canal dédié consiste à allouer une fréquence dédiée.

Par ailleurs, un canal dédié peut être alloué pendant toute la durée de la communication, ou bien pendant une partie seulement de celle-ci. Cette durée peut être éventuellement entrecoupée de micro-coupures.

Grâce à ce canal dédié (dans l'exemple ici décrit il s'agit d'un code dédié), le terminal UE n'a plus besoin d'effectuer des accès aléatoires.

Les paramètres de configuration du canal dédié sont déterminés par la gateway SB et sont transmis au terminal UE sous la forme d'un message de configuration. Parmi les paramètres de configuration, on peut notamment citer la puissance d'émission du terminal UE sur la voie retour, le débit, le code dédié, le taux d'entrelacement et le codage correcteur de canal (ou FEC pour « Forward Error Correction »).

Le terminal UE instaure les paramètres de configuration reçus sur la voie retour de son canal dédié.

Puis, pendant toute la durée de la communication, la gateway SB effectue un contrôle de puissance en boucle sur la voie aller et sur la voie retour, au niveau de la couche physique (couche protocolaire de niveau 1).

Ce contrôle de puissance a été conçu pour des équipements à temps de réponse rapide. Typiquement, une commande de contrôle de puissance (ou commande de reconfiguration) est générée par la gateway SB toutes les 666 $\mu$s (afin de combattre les évanouissements rapides).

Or, dans un réseau à temps de réponse lent, c'est-à-dire dans les réseaux concernés par l'invention, la fréquence de commande de contrôle de puissance n'est pas adaptée si bien qu'elle induit des oscillations destructives.

Quelques rares solutions ont été proposées pour tenter d'améliorer la situation, mais elles ne sont pas entièrement satisfaisantes.

L'invention vise donc également à améliorer la situation.

Comme le sait l'homme de l'art, chaque terminal UE est configuré par le réseau afin d'effectuer des mesures prédéfinies sur la voie aller du canal dédié. Ces mesures sont généralement effectuées sur ce que l'on appelle le signal pilote. Ce signal est diffusé par le réseau sur l'ensemble de sa zone de couverture ZC. Il ne comporte pas d'information utile et sert à la synchronisation des terminaux UE sur la référence de temps du réseau ainsi qu'à la détermination des pertes survenues sur la voie aller de chaque canal dédié.

Les mesures portent par exemple sur la qualité et/ou le niveau du signal pilote reçu.

L'invention propose donc d'adapter la puissance d'émission de la gateway SB sur la voie aller d'un canal dédié en fonction du contenu de chaque message de compte-rendu de mesures que le terminal UE lui adresse de façon classique et/ou de la qualité des signaux qu'il reçoit du terminal UE sur la voie retour de ce canal dédié.

Selon l'invention, la gateway SB (et par exemple son module de traitement MT) analyse tout d'abord le contenu de chaque message de compte-rendu de mesures qu'il reçoit sur un canal dédié à son lien avec un terminal UE et qui portent sur sa voie aller, et/ou la qualité des signaux qu'il reçoit du terminal UE sur la voie retour de ce canal dédié. Puis, la gateway SB adapte sa puissance d'émission sur la voie aller du canal dédié en fonction du contenu du message analysé et/ou de la qualité des signaux analysés.

Lorsque la gateway SB ne dispose pas de suffisamment d'informations pour adapter sa puissance, elle peut être agencée de manière à émettre sur le canal dédié des message(s) de reconfiguration des messages de compte-rendu qui sont émis par le terminal UE concerné. A réception d'un tel message de reconfiguration le terminal UE reconfigure ses paramètres de mesure et transmet à la gateway SB les résultats des mesures reconfigurées.

Il est important de noter que l'adaptation des paramètres de configuration des mesures, objets des comptes-rendus, n'est pas obligatoire. La gateway SB peut en effet adapter la puissance d'émission d'un canal dédié en fonction des contenus de messages de compterendu dont les paramètres sont toujours les mêmes.

L'invention propose également d'adapter une partie au moins des paramètres de configuration de la voie retour d'un canal dédié lorsque la gateway SB s'aperçoit, lors de l'analyse de la qualité des signaux qu'il reçoit d'un terminal UE sur cette voie retour, que la configuration en cours n'est pas optimale.

Ainsi, lorsque cela s'avère nécessaire, la gateway SB détermine un ou plusieurs nouveaux paramètres de configuration de la voie retour du canal dédié, et de préférence sa puissance d'émission. Puis, la gateway SB génère un message de reconfiguration du canal dédié qu'elle transmet au terminal UE concerné sur la voie aller. A réception d'un tel message de reconfiguration le terminal UE reconfigure les paramètres de la voie retour, et par exemple sa puissance d'émission.

Par ailleurs, lorsque le terminal UE a fini de reconfigurer les paramètres de la voie retour de son canal dédié, il peut être agencé de manière à transmettre à la gateway SB un message de confirmation d'exécution de la modification.

Le contrôle de puissance selon l'invention est particulièrement bien adapté au contexte des réseaux satellitaires de type GEO, sans modification de l'interface 3GPP, et donc sans modification des équipements de réseau pour ce qui concerne cette interface.

L'invention ne se limite pas aux modes de réalisation de dispositif de gestion, d'équipement de gestion de demandes d'accès et de procédé de gestion décrits ci-avant, seulement à titre d'exemple, mais elle englobe toutes les variantes que pourra envisager l'homme de l'art dans le cadre des revendications ci-après.

Ainsi, dans ce qui précède on a décrit une application de l'invention à un réseau radio, mais l'invention s'applique également aux réseaux optiques à fibres optiques comportant des répéteurs introduisant de longs délais de transmission de messages d'acquittement (c'est par exemple le cas des lignes sous-marines transatlantiques).

Par ailleurs, l'invention concerne les gateways équipées de dispositifs de mesure chargés de mesurer, via les signaux pilotes émis par les satellites, la puissance reçue desdits satellites, afin de la transmettre aux Node Bs associés.

**Revendications**

1. Procédé de gestion de communications pour un réseau de communications à accès aléatoire dans lequel on procède à la décomposition d'intervalles temporels (IT) en tranches d'accès (AS) pendant chacune desquelles un terminal du réseau (UE) peut transmettre au réseau une demande d'accès associée à un message qu'il veut transmettre, et comportant au moins un dispositif de traitement (SAT) introduisant un délai important de transmission d'un message d'acquittement de demande d'accès audit réseau, **caractérisé en ce qu'**il consiste à émettre périodiquement à destination desdits terminaux (UE) des messages d'acquittement comportant chacun des informations d'acquittement positif associées à chacune desdites tranches d'accès (AS) autorisées, de sorte qu'à réception d'un message d'acquittement, postérieurement à une demande d'accès transmise pendant une tranche d'accès donnée, un terminal demandeur (UE) transmette le message associé à ladite demande d'accès.

2. Procédé selon la revendication 1, **caractérisé en ce qu'**en cas de détection d'une collision de demandes d'accès par ledit réseau, on ne traite pas les messages associés auxdites demandes d'accès.

3. Procédé selon l'une des revendications 1 et 2, **caractérisé en ce qu'**en cas de détection d'une collision de demandes d'accès par ledit réseau, on ne transmet pas aux terminaux (UE), concernés par ladite collision, de message auxiliaire d'acquittement destiné à leurs couches protocolaires de niveaux deux et trois.

**4.** Procédé selon la revendication 3, **caractérisé en ce qu'**en cas de transmission d'un message par un terminal (UE), consécutivement à la réception d'un message d'acquittement, et en l'absence de réception par ledit terminal d'un message auxiliaire d'acquittement en provenance du réseau, on procède à la réémission de ladite demande d'accès par ledit terminal (UE).

**5.** Procédé selon l'une des revendications 1 à 4, **caractérisé en ce qu'**en cas de besoin de transmission d'un message par un terminal (UE) et de détection d'une collision de demandes d'accès par ledit réseau, on procède à la réémission par ledit terminal (UE) de demandes d'accès selon des intervalles de temps de durée variable.

**6.** Procédé selon la revendication 5, **caractérisé en ce que** ladite durée varie de façon aléatoire.

**7.** Procédé selon l'une des revendications 5 et 6, **caractérisé en ce que** ladite durée varie dans un intervalle compris entre environ un dixième de milliseconde et quelques dizaines de millisecondes.

**8.** Procédé selon l'une des revendications 1 à 7, **caractérisé en ce qu'**en cas d'acquittement effectif par le réseau d'une première demande d'accès transmise par un terminal (UE), on attribue audit terminal un canal bidirectionnel dédié, puis on analyse le contenu de chaque message de compte-rendu de mesures effectuées par ledit terminal (UE) sur ledit canal dédié dans le sens réseau vers terminal et/ou la qualité des signaux reçus par ledit réseau sur ledit canal dédié, de manière à adapter la puissance d'émission du réseau en fonction dudit contenu de chaque message.

**9.** Procédé selon la revendication 8, **caractérisé en ce que** l'on procède à l'émission par le réseau sur ledit canal dédié de message(s) de reconfiguration desdits messages de compte-rendu.

**10.** Procédé selon l'une des revendications 1 à 9, **caractérisé en ce qu'**en cas d'acquittement effectif par le réseau d'une première demande d'accès transmise par un terminal (UE), on attribue audit terminal un canal bidirectionnel dédié, puis on analyse la qualité des signaux reçus par ledit réseau sur ledit canal dédié, de manière à adapter, en cas de besoin, une partie au moins des paramètres de configuration dudit canal dédié en fonction de ladite qualité des signaux reçus analysés, puis, en cas d'adaptation, on procède à l'émission par le réseau sur ledit canal dédié de message(s) de reconfiguration comportant lesdits paramètres adaptés, de sorte que ledit terminal (UE) procède à la modification de la configuration dudit canal dédié dans le sens terminal vers réseau.

**11.** Procédé selon la revendication 10, **caractérisé en ce que** ladite adaptation porte sur la puissance d'émission dudit terminal (UE).

**12.** Procédé selon l'une des revendications 10 et 11, **caractérisé en ce qu'**en cas de modification par un terminal (UE) de la configuration de son canal dédié dans le sens terminal vers réseau, on procède à la transmission par ledit terminal (UE), à destination du réseau, d'un message de confirmation d'exécution de ladite modification.

**13.** Equipement (SB) de gestion de demandes d'accès à un réseau de communications à accès aléatoire dans lequel des intervalles temporels (IT) sont décomposés en tranches d'accès (AS) pendant chacune desquelles un terminal du réseau (UE) peut transmettre au réseau une demande d'accès associée à un message qu'il veut transmettre, et ledit réseau comportant au moins un dispositif de traitement (SAT) introduisant un délai important de transmission d'un message d'acquittement de demande d'accès audit réseau, **caractérisé en ce qu'**il est agencé pour mettre en oeuvre un procédé selon l'une des revendications précédentes.

**Claims**

**1.** Communications management method for a random access communications network in which time slots (IT) are broken down into access slots (AS), during each of which a terminal of the network (UE) may send the network an access request associated with a message which it wishes to send, and including at least one processing device (SAT) introducing a significant delay in the transmission of an access request acknowledgement message to said network, **characterized in that** it involves periodically sending to said terminals (UE) acknowledgement messages, each including the positive acknowledgement information associated with each of said access slots (AS) authorized, such that on reception of an acknowledgement message, following an access request sent during a given access slot, a requesting terminal (UE) sends the message associated with said access request.

**2.** Method according to claim 1, **characterized in that** in the event of the detection of a collision of access requests by said network, the messages associated with said access requests are not processed.

**3.** Method according to one of claims 1 and 2, **characterized in that** in the event of the detection of a collision of access requests by said network, the terminals (UE) concerned by said collision are not sent an auxiliary acknowledgement message destined for their level two and three protocol layers.

**4.** Method according to claim 3, **characterized in that** in the event of transmission of a message by a terminal (UE), following the receipt of an acknowledgement message and in the absence of reception by said terminal of an auxiliary acknowledgement message from the network, said access request is resent by said terminal (UE).

**5.** Method according to one of claims 1 to 4, **characterized in that** in the event that a message needs to be sent by a terminal (UE) and that a collision of access requests is detected by said network, said terminal (UE) resends access requests based on time slots of varying durations.

**6.** Method according to claim 5, **characterized in that** said duration varies randomly.

**7.** Method according to one of claims 5 and 6, **characterized in that** said duration varies between approximately one tenth of a millisecond and several tens of milliseconds.

**8.** Method according to one of claims 1 to 7, **characterized in that** in the event of the effective acknowledgement by the network of a first access request sent by a terminal (UE), said terminal is assigned a dedicated bidirectional channel, then the content for each reporting message of measurements taken by said terminal (UE) on said dedicated channel in the network to terminal direction and/or the quality of the signals received by said network on said dedicated channel are analyzed, so as to adapt the transmission power of the network based on said content of each message.

**9.** Method according to claim 8, **characterized in that** the network sends, on said dedicated channel, reconfiguration message(s) for said reporting messages.

**10.** Method according to one of claims 1 to 9, **characterized in that** in the event of effective acknowledgement by the network of a first access request sent by a terminal (UE), said terminal is assigned a dedicated bidirectional channel, then the quality of the signals received by said network on said dedicated channel is analyzed, so as to adapt, if necessary, at least some of the configuration parameters of said dedicated channel based on said quality of the analyzed signals received, then, in the event of adaptation, the network sends on said dedicated channel reconfiguration message(s) including said adapted parameters, such that said terminal (UE) proceeds with the modification of the configuration of said dedicated channel in the terminal to network direction.

**11.** Method according to claim 10, **characterized in that** said adaptation relates to the transmission power of said terminal (UE).

**12.** Method according to one of claims 10 and 11, **characterized in that** in the event of the modification by a terminal (UE) of the configuration of its dedicated channel in the terminal to network direction, said terminal (UE) sends to the network a confirmation message for execution of said modification.

**13.** Device (SB) for management of access requests to a random access communications network in which time slots (IT) are broken down into access slots (AS) during each of which a network terminal (UE) can send the network an access request associated with a message which it wishes to send, and said network including at least one processing device (SAT) introducing a significant delay in the transmission of an access request acknowledgement message to said network, **characterized in that** it is configured to implement a method according to one of the previous claims.

**Patentansprüche**

**1.** Verfahren zur Verwaltung von Kommunikationen für ein Kommunikationsnetzwerk mit wahlfreiem Zugriff, in welchem die Zeitintervalle (IT) in Zugangszeitbereiche (AS) zerlegt werden, während welchen ein Netzwerkendgerät (UE) eine mit einer Nachricht, die es senden möchte, assoziierte Zugangsanforderung an den Netzwerk senden kann, mit mindestens einer Verarbeitungsvorrichtung (SAT), welche eine bedeutende Verzögerung der Übertragungsverzögerung einer Bestätigungsnachricht einer Anforderung für den Zugang zu dem besagten Netzwerk initiiert, **dadurch gekennzeichnet, dass** das Verfahren darin besteht, periodisch Bestätigungsnachrichten, welche jeweils eine mit einem jeden der besagten zugelassenen Zugangszeitbereiche (AS) assoziierte positive Bestätigungsinformationen enthalten, an die besagten Endgeräte (UE) zu senden, so dass bei Empfang einer Bestätigungsnachricht, im Anschluss an eine während eines gegebenen Zugangszeitbereichs gesendete Zugangsanforderung, das anfordernde Endgerät (UE) die mit der besagten Zugangsanforderung assoziierte Nachricht versendet.

**2.** Verfahren nach Anspruch 1, **dadurch gekenn-**

zeichnet, dass die besagten mit den besagten Zugangsanforderungen assoziierten Nachrichten im Fall des Erkennens einer Kollision von Zugangsanforderungen durch das besagte Netzwerk nicht verarbeitet werden.

3. Verfahren nach einem der Ansprüche 1 und 2, **dadurch gekennzeichnet, dass** im Fall des Erkennens einer Kollision von Zugangsanforderungen durch das besagte Netzwerk keine Hilfsbestätigungsnachricht an die von der besagten Kollision betroffenen Endgeräte (UE), welche für deren Protokollschichten der Ebenen zwei und drei bestimmt ist, gesendet wird.

4. Verfahren nach Anspruch 3, **dadurch gekennzeichnet, dass** im Fall der Übertragung einer Nachricht durch ein Endgerät (UE) im Anschluss an den Empfang einer Bestätigungsnachricht, und bei Nichtempfangen einer Hilfsbestätigungsnachricht von dem Netzwerk an dem besagten Endgerät, das besagte Endgerät (UE) die besagte Zugangsanforderung erneut sendet.

5. Verfahren nach einem der Ansprüche 1 bis 4, **dadurch gekennzeichnet, dass**, wenn eine Übertragung einer Nachricht durch ein Endgerät (UE) erforderlich ist und eine Kollision von Zugangsanforderungen durch das besagte Netzwerk erkannt wird, Zugangsanforderungen gemäß Zeitintervallen unterschiedlicher Dauer erneut durch das besagte Endgerät (UE) gesendet werden.

6. Verfahren nach Anspruch 5, **dadurch gekennzeichnet, dass** die besagte Dauer zufallsbedingt variiert.

7. Verfahren nach einem der Ansprüche 5 und 6, **dadurch gekennzeichnet, dass** die besagte Dauer in einem Intervall zwischen ungefähr einem Zehntel einer Millisekunde und einigen zehn Millisekunden variiert.

8. Verfahren nach einem der Ansprüche 1 bis 7, **dadurch gekennzeichnet, dass** im Fall einer wirksamen Bestätigung einer ersten von einem Endgerät (UE) gesendeten Zugangsanforderung durch das Netzwerk dem besagten Endgerät ein dedizierter bidirektionaler Kanal zugewiesen und anschließend der Inhalt jeder Berichtsnachricht von durch das besagte Endgerät (UE) auf dem besagten dedizierten Kanal in der Richtung vom Netzwerk zum Endgerät vorgenommenen Messungen und/oder die Qualität der im besagten Netzwerk auf dem besagten dedizierten Kanal empfangenen Signale analysiert wird, um die Sendeleistung des Netzwerks gemäß dem besagten Inhalt einer jeden Nachricht anzupassen.

9. Verfahren nach Anspruch 8, **dadurch gekennzeichnet, dass** von dem Netzwerk eine Nachricht/Nachrichten für die Rekonfiguration der besagten Berichtsnachten auf dem besagten dedizierten Kanal gesendet wird/werden.

10. Verfahren nach einem der Ansprüche 1 bis 9, **dadurch gekennzeichnet, dass** im Fall der wirksamen Bestätigung einer von einem Endgerät (UE) gesendeten ersten Zugangsanforderung durch das Netzwerk dem besagten Endgerät ein dedizierter bidirektionaler Kanal zugewiesen und anschließend die Qualität der in dem besagten Netzwerk auf dem besagten dedizierten Kanal empfangenen Signale analysiert, um bei Bedarf zumindest einen Teil der Konfigurationsparameter des besagten dedizierten Kanals gemäß der besagten Qualität der empfangenen analysierten Signale anzupassen und im Fall der Anpassung das Netzwerk auf dem besagten dedizierten Kanal eine Rekonfigurationsnachricht/Rekonfigurationsnachrichten mit den besagten angepassten Parametern sendet, so dass das besagte Endgerät (UE) die Änderung der Konfiguration des besagten dedizierten Kanals in der Richtung vom Endgerät zum Netzwerk vornimmt.

11. Verfahren nach Anspruch 10, **dadurch gekennzeichnet, dass** sich die besagte Anpassung auf die Sendeleistung des besagten Endgeräts (UE) bezieht.

12. Verfahren nach einem der Ansprüche 10 und 11, **dadurch gekennzeichnet, dass**, wenn ein Endgerät (UE) die Konfiguration seines dedizierten Kanals in der Richtung vom Endgerät zum Netzwerk ändert, das besagte Endgerät (UE) eine Bestätigungsnachricht für die Ausführung der besagten Änderung an das Netzwerk sendet.

13. Ausrüstung (SB) zur Verwaltung von Anforderungen für den Zugang zu einem Kommunikationsnetzwerk mit zufallsbedingtem Zugang, in welchem die Zeitintervalle (IT) in Zugangszeitbereiche (AS) zerlegt sind, während welchen ein Endgerät (UE) des Netzwerks eine mit der Nachricht, die es übertragen möchte, assoziierte Zugangsanforderung an das Netzwerk sendet, und wobei das besagte Netzwerk mindestens eine Verarbeitungsvorrichtung (SAT) umfasst, welche eine bedeutende Verzögerung für die Übertragung einer Bestätigungsnachricht einer Anforderung für den Zugang zu dem besagten Netzwerk initiiert, **dadurch gekennzeichnet, dass** sie für das Ausführen eines Verfahrens nach einem der vorstehenden Ansprüche ausgelegt ist.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Kueh V.Y.H.** W-CDMA RANDOM ACCESS CHANNEL TRANSMISSION ENHANCEMENT FOR SATELLITE-UMTS. PIMRC, 2002